# EUROPEAN PATENT SPECIFICATION

(11) **EP 3 466 794 B1**
(45) Date of publication and mention of the grant of the patent: **07.12.2022**
(21) Application number: 17194825.0
(22) Date of filing: 04.10.2017
(51) Int. Cl.: B62B 5/00, B62B 3/06

(54) **INDUSTRIAL CARRIAGE, IN PARTICULAR FOR TRANSPORTING LOADS ON PALLET**
INDUSTRIELLER WAGEN, INSBESONDERE ZUM TRANSPORT VON LASTEN AUF PALETTEN
CHARIOT INDUSTRIEL, EN PARTICULIER POUR LE TRANSPORT DE CHARGES SUR PALETTE

(43) Date of publication of application: 10.04.2019
(73) Proprietor: Ticam S.R.L., 21011 Casorate Sempione (VA) (IT)
(72) Inventor: NICORA, Marino, 21013 GALLARATE (IT); MAGHETTI, Andrea Pietro, 6839 SAGNO (CH)
(74) Representative: PGA S.p.A., Milano, Succursale di Lugano

(56) References cited:
- WO-A1-2012/171079
- WO-A2-2007/145508
- DE-A1-102009 059 949
- DE-U1- 9 205 223
- GB-A- 902 898
- GB-A- 2 121 759
- US-B1- 7 744 335

## Description

### Field of the invention

The invention refers to an industrial carriage, and in particular refers to an industrial carriage for transporting loads on pallet or for transporting free loads, of various sizes, also with relevant weight, and in particular with unbalanced center of gravity.

### Background art

There are known industrial carriages, in particular for transporting loads specifically positioned on pallet. The first purpose of the big spread of pallets is to speed the movement of blocks or free loads of huge goods quantities from one place to another, from one region to another, from one nation to another and, last but not least, from one continent to another. Another purpose in its use is in the storage of goods at the companies where, thanks to the use of suitable shelves, it permits a better use of the available space by using the height of the industrial building. The industrial carriages typically comprise a rudder that controls a wheeled carriage that is pivotally installed on a supporting frame from which departs a fork, provided with two arms, suitable in use to enter inside the pallet itself.

Typically, each arm of the fork is provided with a roller or wheel, positioned in correspondence with an ending portion of the fork itself; the purpose of said roller or wheel is to support the weight of the load, with a wheeled carriage, by avoiding the creation of a huge lever on the fork itself.

In industrial carriages of known type, the rudder comprises a function of lifting of the fork that permits in use, when the fork is opportunely introduced in the pallet, to lift the pallet itself, permitting then the displacement.

There are also known industrial carriages that permit to compensate the load slope that sometimes can be in stations for loading goods.

The document DE9205223U1 describes an industrial carriage comprising a system for compensating the slope of a ramp. WO 2007/145508 A2 concerns an industrial carriage for transporting loads on pallets; the carriage is provided with arms which can be shortened and lengthened in accordance to the size of the pallet. Thereby the arms of the of carriage can be arranged in at least a first configuration wherein the first and the second portion of each arm define a first length and a second configuration wherein the first and the second portion of each arm define a second, and different, length.

The Applicant has noticed that the pallets and the loads typically loaded on industrial carriages can have different sizes, according to various standard today in use. Loads and products particularly big can need pallets of not ordinary sizes, not compatible with the sizes and in particular the pitch, i.e. the distance between the two arms, of the fork.

Furthermore, the Applicant has noticed that particularly big loads or products can have strongly unbalanced mass portions, in particular with an unbalance proportional to the sizes of the load and of the product itself.

The Applicant, has in particular observed that for these products or loads, the unbalance given by the load or by the product affects also the transportability of the load or of the product on ramps.

The purpose of the present invention is then to describe an industrial carriage that permits to solve the above described drawbacks.

### Summary of the invention

In order to solve the above described drawbacks, according to a first aspect of the invention is realized an industrial carriage, as disclosed in the independent claim 1.

According to an additional prefererred aspect of the present invention, starting from the numeration tenth, said linear actuator for said first carriage and/or second carriage (3a, 3b) is a piston.

According to an eleventh and twelfth preferred but not limiting aspect, said piston is a hydraulic piston.

According to a thirteen and fourteenth preferred but not limiting aspect, said first carriage (3a) comprises a first and a second wheel (10) and at least a first motor (11) connected to said first wheel (10) and/or to said second wheel.

According to a fifteenth preferred but not limiting aspect, said first carriage (3a) and said second carriage (3b) comprise each one a first and a second wheel (10) and at least a first motor (11) connected to said first wheel (10) and/or to said second wheel.

According to a sixteenth preferred but not limiting aspect, said first carriage (3a) and/or said second carriage (3b) comprise each one a first and a second wheel (10) and a first motor (11) connected to said first wheel (10) and a second motor connected to said second wheel (10).

According to a seventeenth preferred but not limiting aspect, said first carriage (3a) and said second carriage (3b) comprise each one a first and a second wheel (10) a first motor (11) connected to said first wheel (10) and a second motor connected to said second wheel (10) wherein said first and said second motor are configured:
- for actuating in rotation said first and said second wheel (10) in a same sense of rotation;
- for actuating in rotation said first wheel in a sense of rotation opposed with respect to the rotation of said second wheel.

According to an eighteenth preferred but not limiting aspect, said industrial carriage (1) for each first or second arm (4a, 4b), comprises at least an actuator (6), that in said first operating configuration causes a first extension of said second portion (4d) of the respective arm with respect to said first portion (4c), and in said second operating configuration it causes a second extension of said second portion (4d) of the respective arm with respect to said first portion (4c), said second extension being longer than said first extension, and being in particular a maximal extension.

According to a nineteenth preferred but not limiting aspect, said actuator (6) comprises a first ending in use constrained to said first portion (4c) of the respective arm (4a; 4b) and a second ending constrained to said second portion (4d) of the respective arm (4a; 4b).

According to a twentieth preferred but not limiting aspect, said second ending is movable with respect to said first ending.

According to a nineteenth preferred but not limiting aspect, said actuator (6) is a linear actuator.

According to a twenty-first preferred but not limiting aspect, said actuator (6) is a piston.

According to a twenty-second preferred but not limiting aspect, said piston is a hydraulic piston.

According to a twenty-third preferred but not limiting aspect, said first arm (4a) and said second arm (4b) are carriaged arms equipped with at least a wheel or roller (5) configured for supporting the respective arm with respect to a supporting plan or ground upon which in use the respective arm lies.

According to a twenty-fourth preferred but not limiting aspect, said at least a wheel or roller (5) being idly installed on said arm.

According to a twenty-fifth preferred but not limiting aspect, said at least a wheel or roller is installed in correspondence with said second portion (4d) of said first arm (4a) and of said second arm (4b).

According to a twenty-sixth preferred but not limiting aspect, said system of compensation comprises a movable support for said at least a wheel or roller, said movable support being installed in correspondence with said first arm (4a) and/or said second arm (4b);

According to a twenty-seventh preferred but not limiting aspect, the movable support is configured to permit to said wheel of roller (5) a movement between a first position wherein the axis of said wheel of roller (5) is in a first spatial position with respect to said arm and a second spatial position wherein the axis of said wheel or roller (5) is in a second position with respect to said arm.

According to a twenty-eighth preferred but not limiting aspect, said actuator (13) preferably linear, is installed in correspondence with the second portion (4d) of said first and/or second arm (4a; 4b), said actuator (13) being configured for operating during the movement said movable support (14) of the wheel or roller (5) at least between said first and second spatial position.

According to a twenty-ninth preferred but not limiting aspect, said industrial carriage (1) comprises also a system of transversal movement for said first and second arm (4a, 4b), configured for permitting to vary the positioning of the first and second arm (4a, 4b) at least between a first reciprocal distance and a second reciprocal distance.

According to a thirtieth preferred but not limiting aspect, in said industrial carriage (1) the system of transversal movement comprises at least a linear actuator (6) of preferably pneumatic or hydraulic type.

According to a thirty-first preferred but not limiting aspect, said industrial carriage (1) is a self-propelled carriage.

According to a thirty-second preferred but not limiting aspect, said industrial carriage (1) is a self-supplied carriage.

According to the present invention, the self-supplied carriage is to be intended as a carriage the supply of which, preferably electrical, for the movement and/or the functioning of each active part, is supplied by an energy source installed on board, without supply at least temporarily by external sources.

According to a thirty-third preferred but not limiting aspect, said industrial carriage (1) is a carriage suitable for being controlled by an operator remotely positioned with respect to the industrial carriage (1) itself and has a connection system for data exchange with a remote controller electrically connected to it or wireless connected to it.

According to a thirty-fourth preferred but not limiting aspect, said industrial carriage (1) comprises a hydraulic supply center (30), comprising supply conduits of pressurized liquid towards said actuators when of hydraulic type.

According to a thirty-fifth preferred but not limiting aspect, said hydraulic supply unit comprises at least a flow distributor.

According to a thirty-sixth preferred but not limiting aspect, said industrial carriage (1) comprises a data processing unit (20) configured for arranging in at least a first operating configuration wherein it controls said system of compensation in a substantially automatic way.
According to a thirty-seventh preferred but not limiting aspect, said data processing unit (20) is connected to said hydraulic supply unit (30).

According to a thirty-ninth preferred but not limiting aspect, said system of compensation of load unbalances and/or of slope compensation is configured for permitting to vary the height that said first and second arm (4a, 4b) have in use with respect to the ground.

According to a fortieth preferred but not limiting aspect, said system of compensation of load unbalances and/or of slope compensation is configured for permitting to vary the height that said first and second arm (4a, 4b) have in use with respect to the ground by means of an action on said actuators (19) of said first and second carriage (3a, 3b) and by means of an action on said secondary actuators (13).

### Description of figures

The above mentioned aspects and other aspects of the invention will be better described in the following part of the detailed description of a preferred and non-limiting embodiment of the invention, thanks to the attached figures, wherein:
- Figure 1 shows a lateral view of the industrial carriage according to the present divulgation;

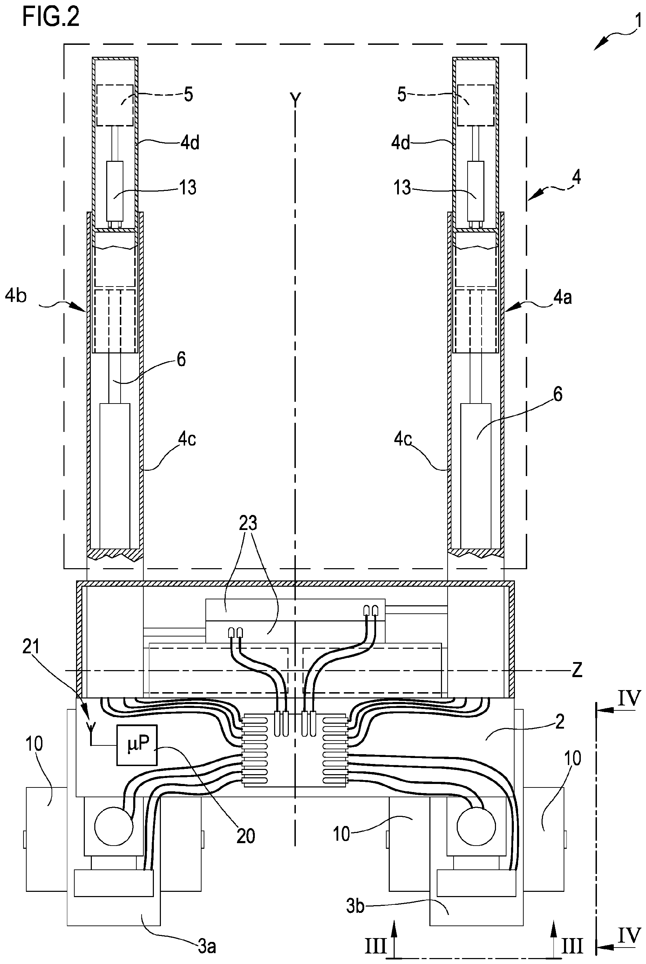

- Figure 2 shows an upper view of the industrial carriage according to the present divulgation;
- Figure 3 shows a first detailed view of a portion of the industrial carriage of figure 1;
- Figure 4 shows a second detailed view of a portion of the industrial carriage of figure 1;
- Figure 5 shows a third detailed view of a portion of the industrial carriage of figure 1, in a first operating configuration; and
- Figure 6 shows a fourth detailed view of a portion of the industrial carriage of figure 1, in a second operating configuration.

### Detailed description of the invention

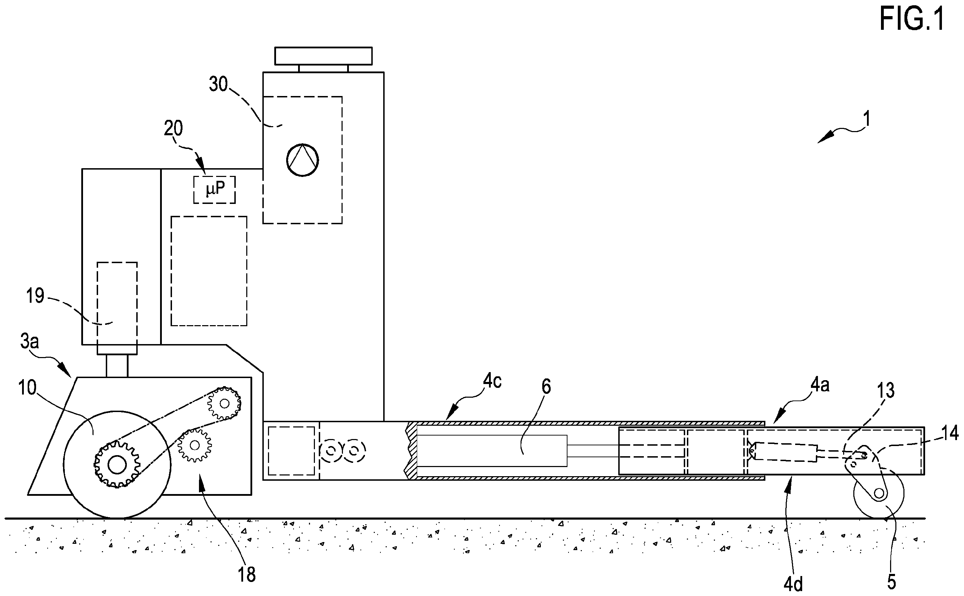

With reference to the attached figures, and in particular to figure 1 it is indicated in its entirety an industrial carriage, suitable for transporting and lifting loads installed and/or positioned on pallet.

With reference to the present description, for "pallet" it is intended a tool used for supporting various types of material, designed to be stored in industries, to be moved with specific tools. Preferably but in a non-limiting extent, the pallet has a wood structure provided with at least a pair of holes, passing preferably from part to part, such as to permit the introduction or insertion of a fork comprising a pair of arms.

The industrial carriage 1 object of the invention is then advantageously configured for permitting the transport of loads both on pallet of European standard size, that is equal to 800x1200mm, and on pallet of other size, sensibly bigger also in the order of 2 meters per side. The industrial carriage 1 object of the invention is also configured for operating as carriage for transporting relevant weight loads, also in the order of 20t.

The industrial carriage 1, that is configured as a transpallet machine, is a carriage that comprises a metallic supporting frame 2, in particular preferably realized at least partially in stainless steel, on which is fixed a pair of carriages that comprises a first and a second carriage 3a, 3b. The first and the second carriage 3a, 3b are positioned on the rear side on the supporting frame 2 and are substantially installed in correspondence with the left and right ending of this supporting frame 2, such that to maximize the reciprocal distance and define a rear support base for the distribution of the weight that is the maximum possible.

The Applicant underlines that even if in the attached figures there is reference to an industrial carriage provided with a first and a second carriage 3a, 3b, it could be configured an embodiment such that the first and the second carriage 3a, 3b are replaced by a single carriage 3a, still positioned in the rear position on the industrial carriage 1; if there is a single carriage 3a, this carriage is preferably but in a non-limiting extent centered on the longitudinal axis of the industrial carriage 1 itself, then on the first reference axis Y. If there is a single carriage 3a, the industrial carriage 1 has three supporting points on the ground, of which one on the rear side and two on the front side, in correspondence with arms, as it will be better described by the following part of description.

Peculiar characteristics of the industrial carriage 1 object of the invention are having a fork the arms 4a, 4b of which have adjustable length and reciprocal distance, and having a system of compensation of unbalances of load and/or of compensation of the slope, in particular of biaxial type. During the following part of description, the arms 4a, 4b of the fork will be defined as "carriaged arms" because preferably provided with a wheel or roller for the support of the load. This configuration is not to be intended as limiting.

In order to reach the aforementioned purposes, to the supporting frame 2 is connected a load portion 4, comprising a first carriaged arm 4a and a second carriaged arm 4b configured for permitting the loading of at least one pallet. Preferably but in a non-limiting extent also the first and second carriaged arm 4a, 4b are realized in metallic material that can advantageously comprise stainless steel or its alloys.

The first and second carriaged arm 4a, 4b extend parallely the one with respect to the other and have parallel alignment to a first reference axis Y that detects the longitudinal axis of the industrial carriage 1. In particular, if observed from the upper side, the first and second carriaged arm 4a, 4b lay respectively on the left and on the right of the first reference axis Y.

According to an important aspect of the invention, the first carriaged arm 4a and the second carriaged arm 4b have each one a wheel or roller 5 as support to the load. Advantageously, the contemporary presence of a wheel or roller 5 on each carriaged arm 4a, 4b with the at least a carriage 3a, 3b advantageously permits to distribute uniformly the weight of the load on the structure of the carriage, in particular on the front portion of the industrial carriage 1; this front portion is the one that - in use - as first receives the weight of the load to transport.

The use of a first and second rear carriage 3a, 3b with the wheels or rollers 5 on each of the carriaged arms 4a, 4b advantageously allows to have at least four main points of distribution of the weight of the load and/or of the pallet on the industrial carriage 1, that permits an optimal distribution of the load and a good stability of the assembly load and industrial carriages 1 also in presence of a ground with a non-uniform surface.

In order to maximize the area upon which the weight of the load is distributed in use, advantageously the Applicant has provided for positioning the wheels or rollers 5 in correspondence with a substantial correspondence of the ending of arms 4a, 4b that is opposed with respect to the ending jointed with the supporting frame 2; in particular, this ending is the front ending of each of said first carriaged arm 4a and second carriaged arm 4b.

In order to distribute the weight of also big loads, in particular when installed on pallets of non standard size, and particularly bigger than the standard sized pallets, the Applicant has advantageously conceived the fork such that the first and second carriaged arm 4a, 4b have each one a first portion 4c and a second portion 4d. The first portion 4c is the one nearest the supporting frame 2, whereas the second portion 4d is the one most distant with respect to the supporting frame 2. In particular the second portion 4d of each arm is configured for sliding with respect to the first portion 4c of the arm itself.

The first and the second portion 4c, 4d of each of the first and second carriaged arm 4a, 4b, permit to define a first operating configuration wherein they define, for the respective arm, a first length, and at least a second operating configuration wherein they define, for the respective arm, a second length. More in particular, the definition of said first and second length is given by a reciprocal sliding between the first and the second portion 4c, 4d of each of the arms, preferably by means of an at least partial introduction. The sliding of the second portion 4d with respect to the first portion 4c takes place along a direction substantially parallel to the first reference axis Y, between at least a first configuration wherein the second portion 4d enters for a first, and preferably maximal, measure within the first portion 4c and a second configuration wherein the second portion 4d enters for a second, and preferably minimal, measure inside the first portion 4c. The use of arms the extension of which is adjustable permits to reduce the risk of wrong positioning of the load, and in particular permits to reduce the levers that are created with loads the center of gravity of which is unbalanced.

The extension of the second portion 4d with respect to the first portion 4c permits thus advantageously to make the assembly formed by the first and second portion as long as at least the depth of pallets of also different sizes, avoiding from one side that the fork rises significantly further than the shape in plane view of the pallet or load and at the same time, through an opportune adjustment, permitting to avoid the risk of collapse and consequent tipping of the load; in case on the industrial carriage 1 are loaded shorter pallets, the second portion 4d can be further introduced in the first portion 4c, whereas in case on the industrial carriage 1 are loaded deeper pallets, the second portion 4d can be further extracted from the first portion 4d.

With the first and the second portion of each carriaged arm 4a, 4b, there are the actuators 6 that control the movement of the second portion 4d with respect to the first portion 4c. In a preferred embodiment, the first and the second portion 4c, 4d of the first and second arm 4a, 4b have a boxed shape, preferably but in a non-limiting extent of square or rectangular cross-section with preferably beveled corners; thanks to the boxed shape, it is possible to introduce the actuators in the cavity realized by the boxing itself. In particular when the first and the second portion 4c, 4d of the first and second carriaged arm 4a, 4b are boxed, the two portions slide linearly the one with respect to the other having the possibility to enter at least partially the one inside the other. This configuration is particularly advantageous if the actuators 6 are - as schematically shown in the attached figures - linear actuators comprising at least a hydraulic piston. The boxed shape is not to be intended as limiting, because it is possible to realize the first and the second portion of each arm 4a, 4b in whole shape, and to position the actuator on a side of each arm.

When the actuators 6 are linear actuators comprising at least a hydraulic piston, these actuators have a first ending constrained to the first portion 4c of a respective arm and a second ending 4d constrained instead to the second portion 4d of the respective arm. The extension and the shortening of the movable portion of the hydraulic piston determines the possibility of movement of the second portion 4d with respect to the first portion 4c of each of the first and second carriaged arm 4a, 4b and also between said first and second configuration, and more in particular also in a plurality of configurations of intermediate extension between the first and the second configuration.

The wheels or rollers 5 are installed in correspondence with the second portion 4d of each arm 4a, 4b. This permits to adapt the supporting area of the industrial carriage 1 according to the extension or shortening of the first and second carriaged arm 4a, 4b.

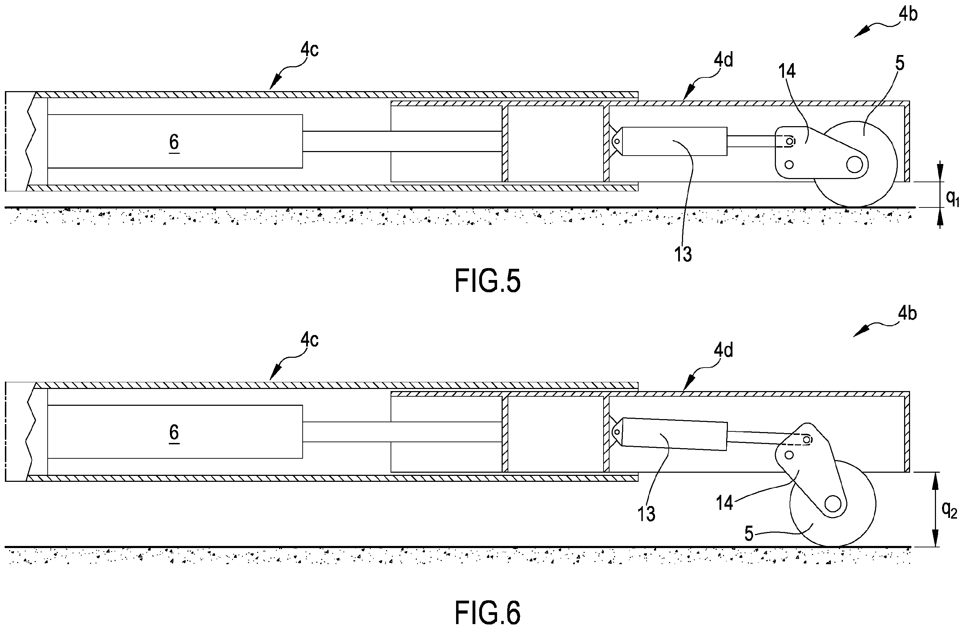

In particular, in order to compensate the unbalance of big loads and, in association, to permit to compensate the non-uniformity of the ground on which in use the industrial carriage 1 lies, the Applicant has designed to install the wheels or rollers 5 in a movable way with respect to respective first arm 4a, or second arm 4b. Particularly, the wheels are installed on supports 14 that permit a movement at least between a position with respect to respective first or second carriaged arm 4a, 4b, and in particular with respect to the second portion 4d of the respective first or second carriaged arm 4a, 4b, and a second position with respect to respective first or second carriaged arm 4a, 4b. This adjustment of position causes a movement such that the axis of the wheel or roller 5 can be at least at a first distance q₁ from the second portion 4d of the respective carriaged arm 4a, 4b and a second distance q₂ from the second portion 4d of the respective carriaged arm 4a, 4b. Figures 5 and 6 show two configurations wherein the axis of the wheel or roller 5 is nearer to the second portion 4d of the respective arm (figure 5) and more distant with respect to the second portion 4d of the respective arm (figure 6) and show heights for said first and second distances q₁, q₂. The wheels or rollers 5 with the respective supports 14 form therefore part of the system of compensation of unbalances of load and/or compensation of the slope.

Preferably, this distance is a distance that when the industrial carriage 1 is in use is substantially vertical, and is therefore measured along a second reference axis X that is orthogonal with respect to the first reference axis Y. The variation of this distance determines a variation of the distance from the ground of the second portion of each arm. By assuming a substantial rigidity of the assembly formed by each first and second portion 4c, 4d of each carriaged arm 4a, 4b, it is clear that the variation of the distance that the axis of the wheel or roller 5 has with respect to the first and second portion 4c, 4d of each arm determines the variation of the inclination that the first and respectively second carriaged arm 4a, 4b assumes with respect to the ground.

The movement of the axis of the wheel or roller 5 of the first and second carriaged arm 4a, 4b can be simultaneous. This causes a simultaneous and preferably symmetrical lifting or lowering of the second portion 4d both of the first and of the second carriaged arm 4a, 4b with respect to ground that advantageously permits to compensate slopes in the direction detected by the first reference axis Y. The movement of the axis of the wheel or roller 5 of the first or of the second carriaged arm 4a, 4b can also be not simultaneous, and more generally be independent from the movement of the axis of the wheel or roller 5 of the opposed carriaged arm; this configuration permits to compensate the slope also in transversal direction with respect to the direction detected by the first reference axis Y.

According to a preferred and non-limiting embodiment of the invention here described and shown in the attached figures, each of the arms 4a, 4b of the industrial carriage 1 comprises also a secondary actuator 13 for the movement of the wheel or roller 5. In particular, the wheel or roller 5 of each of said first and second arm 4a, 4b is operated in movement by a secondary actuator 13 of linear type, more preferably comprising at least a hydraulic piston. By using an actuator with hydraulic piston is advantageously possible to vary the position of the wheel or roller 5, in particular the position of its axis with respect to the second portion 4d of each one between the first and second arm 4a, 4b, without solution of continuity. Therefore also the secondary actuators 13 are parts of the system of compensation of unbalances of load and/or compensation of the slope. It is to be noticed that the independent functioning of the secondary actuators 13 permits to realize a compensation both along the first reference axis Y - in case of simultaneous functioning - and a compensation along the first reference axis and along the second reference axis Z - in case of an independent and not simultaneous actuation.

In the preferred and not-limiting embodiment shown in the attached figures, also the secondary actuator 13 is contained in the respective arm, more in particular resulting installed completely within the second portion 4d of the respective first, second arm 4d. Clearly this solution is possible when at least the second portion 4d of each one between the first and second arm 4a, 4b has a boxed structure. In this specific configuration, the at least a hydraulic piston comprises a first ending constrained to the second portion 4d and a second ending, mobile with respect to the first ending. The second ending is, in detail, fixed to the support 14 of the wheel or roller 5.

The Applicant has observed that the compensation of the unbalance of the load, with the flexibility of operability for the movement of pallets also of non standard sizes is advantageously optimized also by a possibility of adjustment of the transversal distance between the first and second arm 4a, 4b; this distance is adjustable in direction detected by a third reference axis Z orthogonal both to the first and to the second reference axis Y, X. In particular, this causes that according to a preferred and not limiting embodiment, the industrial carriage 1 has a first and a second carriaged arm 4a, 4b the reciprocal distance of which can be varied at least between a first, and preferably minimal distance, and a second and preferably maximal distance. The adjustment of the reciprocal distance between the first and the second arm 4a, 4b takes place thanks to the aid of at least a transversal actuator 23, conjoined to the first and to the second arm 4a, 4b or, as in the case of the embodiment shown in the attached figures, by means of a pair of transversal actuators 24. These transversal actuators 23 are preferably but not limiting parallel the one to the other, overlaid or juxtaposed, and extended in direction opposed the one with respect to the other. They have in fact a first ending fixed to said supporting frame 2 and a second ending, mobile with respect to the first ending, constrained to the respective first carriaged arm 4a or second carriaged arm 4b. Preferably, but not limiting, the first and the second transversal actuator are linear actuators comprising a hydraulic piston.

The first and second arm 4a, 4b move the one with respect to the other in a movement preferably symmetrical with respect to first reference axis Y. For ensuring this possibility the two transversal actuators must be activated contemporarily and extend in mutual and symmetrical way the one with respect to the other.

In order to optimize the stability of big loads, big sizes, particularly unbalanced, and in particular if of relevant weight, and for obtaining a stability that can compensate also the not uniformity of the ground on which in use the industrial carriage 1 lies and moves, the first and the second carriage 3a, 3b are movable with respect to the supporting frame 2, specifically movable along said second reference axis X between at least a first and a second position different between them.

More in particular, as it is possible to notice from figures 1, 3 and 4, each one between the first and the second carriage 3a, 3b has an actuator 19 that permits to vary the position with respect to the supporting frame 2. In particular, the actuator 19 of each carriage permits to vary the position that the axis of the wheel 10 of each carriage 3a, 3b assumes with respect to the supporting frame 2, in particular to vary the position with respect to the first direction detected by the second reference axis X. This advantageously permits to increase or lower the supporting frame 2 and/or the rear side of the industrial carriage 1 with respect to the ground.

Preferably but not limiting, the actuators 19 are linear actuators that comprise a hydraulic piston, the direction of which of substantial and/or main development is parallel to the second reference axis X. In detail, the hydraulic piston comprises a first ending with the respective first carriage 3a or second carriage 3b and a second ending, mobile with respect to said first ending, united to the supporting frame.

The use of two separate actuators 19, one for the first carriage 3a, and one for the second carriage 3b advantageously permits to obtain independence of movement of the first and of the second carriage 3a, 3b along said direction detected by the second reference axis X. This independence of functioning permits to compensate unbalances of the load that are near to the rear zone of the industrial carriage 1.

The independence of functioning of the actuators 19 for the first and the second carriage 3a, 3b, with the independence of functioning for the auxiliary actuators 13 for the wheels or rollers 5 of the first and second arm 4a, 4b advantageously permits to compensate slopes also strongly transversal with respect to the first reference axis Y and in particular orthogonal or substantially orthogonal with respect to said first reference axis Y.

The industrial carriage 1 here described is preferably a self-propelled carriage; in this advantageous case, each between the first and the second carriage 3a, 3b has at least one and preferably two wheels 10 opposed the one to the other united to a mechanism of active movement, that permits the clockwise and counterclockwise rotation of them. Advantageously, the Applicant for this reason has designed carriages 3a, 3b whose body has sufficient space for installing at least a motor 11 for carriage and preferably two motors per carriage.

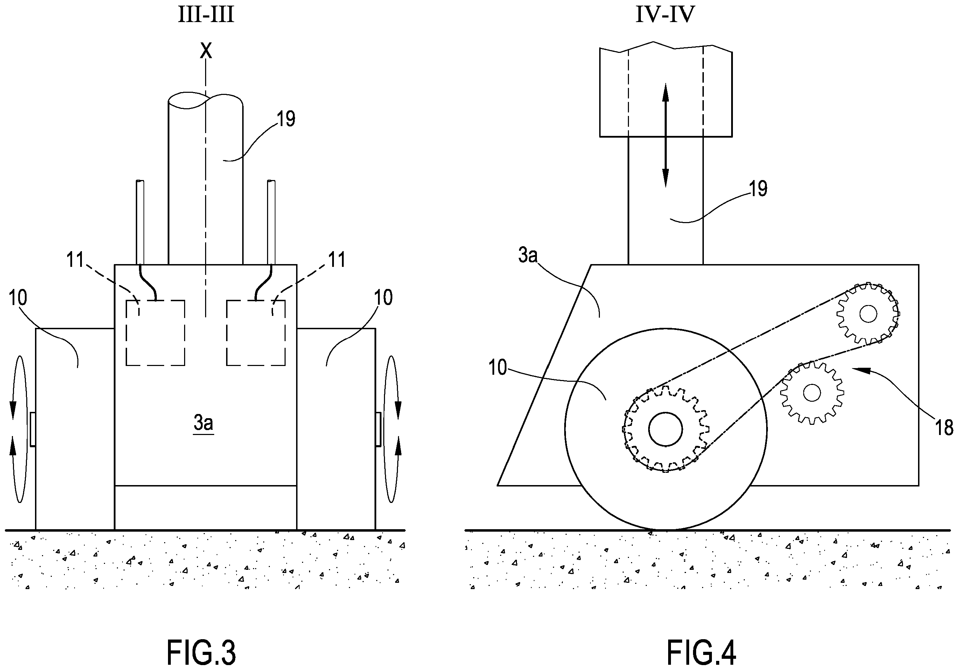

As it is shown in figure 3 and in figure 4, the first and the second carriage 3a, 3b have each one at least a motor comprising a rotating shaft mechanically connected with at least a wheel 10 of the respective carriage 3a, 3b. Preferably, as shown in figure 4, the shaft of the motor 11 is coupled with a transmission system, in particular a chain transmission 18 that permits to transfer the movement toward the respective wheel 10. The chain transmission 18 takes place on at least a pinion-crown pair that advantageously can be opportunely sized in order to reduce, if necessary, the transmission ratio toward the respective wheel. The use of a chain transmission must not be intended as limiting, since it is possible alternatively to use a belted or other type of transmission, provided that it is capable of transferring the movement in a substantially rigid way from the motor 11 to the wheel 10.

If each carriage 3a, 3b is provided with two motors 11, each motor will control a respective wheel 10, preferably by means of its chain transmission 18 respectively positioned on the left and/or right side of the carriage 3a, 3b. The Applicant has observed that this configuration permits to activate in the movement the wheels 10 not only in a mutual way but also in a non mutual way, advantageously permitting to the carriage 3a or 3b to rotate on itself. This possibility of movement is also given by the presence of an actuator in form of hydraulic piston, that even if determines a definition of the capacity of movement of the carriage along said second reference axis X, permits to it a whole 360° rotation freedom around said second reference axis X.

Preferably but in a non-limiting extent, the motor 11 of each carriage 3a, 3b is of hydraulic type. This configuration is not to be intended as limiting, because this motor can be also of electrical type.

The Applicant has in particular observed that when the actuators previously described are hydraulic pistons, there is particular convenience in the use of a hydraulic motor 11 also in this case. In this way it is possible to define a unique hydraulic control unit 30, conveniently positioned on the supporting frame 2, provided with suppliers suitable to give pressure in a selective way to at least part of the actuators of the industrial carriage 1 according to the control needs.

Preferably but in a non-limiting extent, the industrial carriage 1 comprises also a data processing unit 20, electrically connected with the hydraulic control unit 30 that in turn comprises a liquid pump preferably of electro-actuated type. This data processing unit is configured for causing the opening and/or closing, total or partial of the electro-valves of the supplier in the hydraulic control unit 30, alternatively according to a movement program carried out autonomously or according to control signals deriving from a remote controller controlled by the user.

The remote controller controlled by the user can be a cabled remote controller electrically connected to the data processing unit, or alternatively be a wireless remote controller. In this case, conveniently, the data processing unit 20 will be provided with an antenna 21 for the radio data transmission. The data processing unit can be a processor of *general purpose* type specifically configured through said software program or firmware for carrying out one or more parts of the method detected in the present invention or be an ASIC or dedicated processor, specifically programmed for executing at least part of the operations of the method or control process of the industrial carriage 1 object of the invention.

In use the industrial carriage 1 can be used as follows. When a load on a pallet must be transported, at first the user provides for detecting the pitch of holes of the pallet where it must be introduced the fork. If the pitch of the pallet that must be transported is not equal to the pitch of the fork, the reciprocal distance between the first and second carriaged arm 4a, 4b is opportunely adjusted by the user by means of functioning of the transversal actuator or actuator. In particular, the functioning of the transversal actuators is advantageously carried out by means of the use of the remote controller.

By means of operating the remote controller the user can also adjust the height of the front portion of the industrial carriage 1, by means of the control of the auxiliary actuators 13 such as to bring the axis of the wheels or rollers 5 to a height sufficient for permitting the introduction of the first and second carriaged arm 4a, 4b within the pallet itself.

If the length of the carriaged arms 4a, 4b is not sufficient, that is if the depth of the pallet is higher than the sum of the lengths of the first portion 4c and of the second portion 4d, the user through the use of the remote controller can adjust the length of arms in particular by letting out a portion bigger than the portion 4d with respect to the first portion 4c. Conveniently the extension can be ended when the length of the first portion 4c and the length of the second portion 4d are equal or substantially equal to the depth of the pallet.

At this point, through a new action on the remote controller, the user can actuate the actuators of the first and second carriage 3a, 3b and of wheels or rollers 5 such as to cause a uniform substantially lifting of the pallet and then of the load from the ground. This operation substantially causes that the movement of the actuators of the first and second carriage 3a, 3b with the actuators of the wheels or rollers 5 is substantially simultaneous. According to the present invention, as lifting of the carriage is intended a lifting of the height at which are positioned the at least first and the second carriaged arm 4a, 4b, along a direction substantially parallel to the direction detected by the second reference axis X; after the completion of the lifting, the first and second arm 4a, 4b lay ideally on a plan parallel to the plan on which lay before said lifting but the two plans are rigidly translated along said second reference axis.

Thanks to the possibility of actuating motors 11, the load on the industrial carriage 1 can be moved without effort; through the functioning of the remote controller, the user can control the industrial carriage 1 both in substantially linear translation on curved paths in direction parallel to the first reference axis Y or diagonally with respect to this last one.

If the industrial carriage 1 encounters slopes, the auxiliary actuators 13 for the wheels or rollers 5 and the actuators 19 of the first and second carriage 3a, 3b are actuated according to the specific configuration of the slope, advantageously compensating: slopes parallel to the first reference axis Y, slopes parallel to the third reference axis Z and then orthogonal to the first reference axis Y, or slopes diagonally oriented to the first and third reference axis Y,Z that then have a part both on the first and on the third reference axis. A compensation of slopes substantially parallel to the first reference axis Y takes place with a simultaneous functioning of the auxiliary actuators 13 for wheels or rollers 5, during the lifting of the second portion 4d with respect to the ground (by compensating a descent) or during the lowering of the second portion 4d with respect to the ground (by compensating an ascent) and/or with a simultaneous functioning of the actuators 19 of the first and second carriage 3a, 3b, such as to cause a lowering of the height at which there is the rear portion of the industrial carriage 1 (by compensating a descent) or a lifting of the height at which there is the rear portion of the industrial carriage 1 (by compensating an ascent).

A compensation of slopes substantially parallel to the third reference axis Z takes place with a simultaneous functioning of the secondary actuator 13 for the wheels or rollers 5 and of the actuator 19 for the carriage 3a or 3b of the same side; if the actuators are operated for causing a lifting of a specific left or right side of the industrial carriage 1 with respect to the opposite side, the slopes toward said specific side are compensated.

The compensation of the slope along said first and second reference axis Y, Z can be then carried out manually through said remote controller; alternatively, the compensation of the slope along said first and third reference axis can be automatically carried out. In this case, conveniently, an embodiment of the industrial carriage 1 comprises sensors for positioning and/or inclination configured for detecting inclinations at least of the first and second carriaged arm 4a, 4b along said first reference axis Y and third reference axis Z. These sensors are electrically connected to the data processing unit 20 with known technique that is then here not described. If the industrial carriage 1 is provided with a data processing unit configured for operating an automatic compensation along the first reference axis Y and the third reference axis Z, advantageously this data processing unit 20 is configured also for permitting the commutation between this automatic compensation and a manual compensation of the slope and/or of the unbalance of the load.

When the data processing unit 20 is configured for carrying out an automatic compensation along said first reference axis Y and along said third reference axis Z, this data processing unit 20 configures itself in an operating configuration wherein at regular intervals it receives from the sensors positioning and/or inclination data of the industrial carriage along the first reference axis Y and along the third reference axis Z, and according to these inclination data, provides for compensating it by means of an activation of the actuators 19 of the first and/or second carriage 3a, 3b and of the secondary actuators 13 of the first and/or of the second carriaged arm 4a, 4b.

The control unit and the hydraulic control unit 30 are preferably supplied by a battery or a plurality of batteries installed on board. This battery or plurality of batteries is typically of rechargeable type and when enough recharged autonomously provides energy to the industrial carriage 1, making it an operationally self-supplied carriage, that is free from needing a connection to an external energy source, in particular free from needing a continuous connection to an external energy source. For this reason, the industrial carriage 1 here described can be defined as a self-supplied carriage. However, it is possible to configure the carriage for having an auxiliary supply supplied from the outside, for example and in a non-limiting extent, deriving from a domestic net electrical supply source - 230v - or industrial - 380 V - of a single or three phase type, as aid and support to the battery.

It is finally clear that to the industrial carriage object of the invention can be applied additions, changes or variants obvious for an expert in the art without editing from the scope provided by the attached claims.

## Claims

1. Industrial carriage, in particular for transporting loads on pallet comprising:
- a supporting frame (2);
- at least a first carriage (3a), installed on said supporting frame (2);
- a loading portion (4), comprising a first arm (4a) and a second arm (4b) designed for permitting the loading of at least one pallet; said first arm and said second arm (4a, 4b) developing themselves each one substantially linearly along a direction detected by a first reference axis (Y);
wherein said first and said second arm (4a, 4b) comprise each one at least a first portion (4c) and a second portion (4d); said first and second arm (4a, 4b) comprising at least a first operating configuration within which said first portion (4c) and second portion (4d) define a first length of the respective first and/or second arm (4a, 4b) and a second operating configuration within which said first portion (4c) and second portion (4d) define a second length of the respective first and/or second arm (4a, 4b);
wherein the industrial carriage comprises a second carriage (3b) installed on said supporting frame,
**characterized in that** the first carriage (3a), and optionally said second carriage (3b) are pivotally installed on said supporting frame (2) and rotate with respect to a second reference axis (X) orthogonal with respect to said first reference axis (Y); the industrial carriage comprising a compensation system of load unbalances and/or of slope compensation, said compensation system being configured for operating along said first reference axis (Y) and/or along a third reference axis (Z) orthogonal with respect to said first reference axis (Y);
wherein said compensation system comprises at least a linear actuator (19), for said first carriage (3a), and a linear actuator (19) for said second carriage (3b), and wherein each one of said linear actuators (19) is configured to be arranged in at least a first operating configuration in correspondence of which said first carriage (3a) and/or said second carriage (3b) are in a first position with respect to said supporting frame, and in a second operating configuration in correspondence of which said first carriage (3a) and/or said second carriage (3b) are in a second position with respect to said supporting frame (2), said second position being different from said first position and wherein said actuator for said first carriage (3a) is operable independently from said actuator for said second carriage (3b).

2. Industrial carriage according to claim 1, wherein said first carriage (3a) and said second carriage (3b) comprise each one a first and a second wheel (10) and at least a first motor (11) connected to said first wheel (10) and/or to said second wheel.

3. Industrial carriage according to claim 2, wherein said first carriage (3a) and said second carriage (3b) comprise each one a first and a second wheel (10) a first motor (11) connected to said first wheel (10) and a second motor connected to said second wheel (10) wherein said first and said second motor are configured:
- for actuating in rotation said first and said second wheel (10) in the same sense of rotation;
- for actuating in rotation said first wheel in a sense of rotation opposed with respect to the rotation of said second wheel.

4. Industrial carriage according to any of the previous claims, comprising for each first or second arm (4a, 4b), at least an actuator (6), optionally linear, comprising a first ending portion constrained to said first portion (4c) of the respective installation arm, and a second ending portion constrained to said second portion (4d) of the respective installation arm, and wherein said actuator (6), optionally linear, in said first operating configuration causes a first extension of said second portion (4d) of the respective arm with respect to said first portion (4c), and in said second operating configuration it causes a second extension of said second portion (4d) of the respective arm respective to said first portion (4c), said second extension being longer than said first extension, and being in particular a maximal extension.

5. Industrial carriage according to any of the previous claims, wherein said first arm (4a) and said second arm (4b) are carriaged arms provided with at least a wheel or roller (5) configured for supporting the respective arm with respect to a supporting plan or ground upon which in use the respective arm lies, said at least a wheel or roller (5) being idly installed on said arm.

6. Industrial carriage according to claim 5, wherein said at least a wheel or roller is installed in correspondence of said second portion (4d) of said first arm (4a) and of said second arm (4b).

7. Industrial carriage according to claim 5 or claim 6, wherein said compensation system of load unbalances and/or of slope compensation is configured for operating along said first reference axis (Y) and/or along a third reference axis (Z) orthogonal with respect to said first reference axis (Y), wherein said compensation system comprises a movable support (14) for said at least a wheel or roller (5), said movable support being installed in correspondence of said first arm (4a) and/or of said second arm (4b); said movable support being configured for allowing said wheel or roller (5) to move between a first spatial position wherein the axis of said wheel or roller (5) is in a first position with respect to said arm and a second spatial position wherein the axis of said wheel or roller is in a second position with respect to said arm.

8. Industrial carriage according to claim 7 comprising an actuator (13) preferably linear, installed in correspondence of the second portion (4d) of said first and/or second arm (4a; 4b), said actuator (13) being configured for operating in movement said movable support (14) at least between said first and said second spatial position.

9. Industrial carriage according to any of the previous claims, comprising also a system of transversal movement for said first and second arm (4a, 4b), configured for permitting to vary the positioning of the first and second arm (4a, 4b) at least between a first reciprocal distance and a second reciprocal distance; said system of transversal movement comprising at least a linear actuator (6) of preferably pneumatic or hydraulic type.

10. Industrial carriage according to claim 1, comprising a data processing unit (20) configured for arranging in at least a first operating configuration wherein it controls said compensation system in a substantially automatic way.

11. Industrial carriage according to claim 1, wherein said compensation system of load unbalances and/or of slope compensation is configured for permitting to vary the height that said first and second arm (4a, 4b) have in use with respect to the ground.

## Patentansprüche

1. Industrieller Wagen, insbesondere zum Transportieren von Lasten auf Paletten, umfassend:
- einen Halterungsrahmen (2);
- wenigstens einen ersten Wagen (3a), welcher an dem Halterungsrahmen (2) installiert ist;
- einen Beladungsabschnitt (4), welcher einen ersten Arm (4a) und einen zweiten Arm (4b) umfasst, dafür ausgelegt, die Beladung wenigstens einer Palette zu erlauben; wobei sich der erste und der zweite Arm (4a, 4b) jeweils im Wesentlichen linear entlang einer durch eine erste Referenzachse (Y) detektierten Richtung erstrecken;
wobei der erste und der zweite Arm (4a, 4b) jeweils wenigstens einen ersten Abschnitt (4c) und einen zweiten Abschnitt (4d) umfassen; wobei der erste und der zweite Arm (4a, 4b) wenigstens eine erste Betriebskonfiguration, innerhalb welcher der erste Abschnitt (4c) und der zweite Abschnitt (4d) eine erste Länge des ersten bzw. des zweiten Arms (4a, 4b) definieren, und eine zweite Betriebskonfiguration umfassen, innerhalb welcher der erste Abschnitt (4c) und der zweite Abschnitt (4d) eine zweite Länge des ersten bzw. des zweiten Arms (4a, 4b) definieren;
wobei der industrielle Wagen einen zweiten Wagen (3b) umfasst, welcher an dem Halterungsrahmen installiert ist,
**dadurch gekennzeichnet, dass** der erste Wagen (3a), und optional der zweite Wagen (3b), drehbar an dem Halterungsrahmen (2) installiert sind und sich in Bezug auf eine zweite Referenzachse (X) drehen, welche orthogonal in Bezug auf die erste Referenzachse (Y) ist;
wobei der industrielle Wagen ein Kompensationssystem für Lastungleichgewichte und/oder für eine Neigungskompensation umfasst, wobei das Kompensationssystem dazu eingerichtet ist, entlang der ersten Referenzachse (Y) und/oder entlang einer dritten Referenzachse (Z) zu arbeiten, welche orthogonal in Bezug auf die erste Referenzachse (Y) ist;
wobei das Kompensationssystem wenigstens einen linearen Aktuator (19) für den ersten Wagen (3a) und einen linearen Aktuator (19) für den zweiten Wagen (3b) umfasst und wobei jeder der linearen Aktuatoren (19) dazu eingerichtet ist, in wenigstens einer ersten Betriebskonfiguration, entsprechend welcher sich der erste Wagen (3a) und/oder der zweite Wagen (3b) in Bezug auf den Halterungsrahmen in einer ersten Position befinden, und in einer zweiten Betriebskonfiguration angeordnet zu sein, entsprechend welcher sich der erste Wagen (3a) und/oder der zweite Wagen (3b) in Bezug auf den Halterungsrahmen in einer zweiten Position befinden, wobei die zweite Position von der ersten Position verschieden ist und wobei der Aktuator für den ersten Wagen (3a) unabhängig von dem Aktuator für den zweiten Wagen (3b) betreibbar ist.

2. Industrieller Wagen nach Anspruch 1, wobei der erste Wagen (3a) und der zweite Wagen (3b) jeweils ein erstes und ein zweites Rad (10) und wenigstens einen ersten Motor (11) umfassen, welcher mit dem ersten Rad (10) und/oder mit dem zweiten Rad verbunden ist.

3. Industrieller Wagen nach Anspruch 2, wobei der erste Wagen (3a) und der zweite Wagen (3b) jeweils ein erstes und ein zweites Rad (10), einen ersten Motor (11), welcher mit dem ersten Rad (10) verbunden ist, und einen zweiten Motor umfassen, welcher mit dem zweiten Rad (10) verbunden ist, wobei der erste und der zweite Motor dazu eingerichtet sind:
- das erste und das zweite Rad (10) in dem gleichen Drehsinn in Drehung zu versetzen;
- das erste Rad in einem in Bezug auf die Drehung des zweiten Rads entgegengesetzten Drehsinn in Drehung zu versetzen.

4. Industrieller Wagen nach einem der vorhergehenden Ansprüche, umfassend für jeden ersten oder zweiten Arm (4a, 4b) wenigstens einen Aktuator (6), optional linear, umfassend einen ersten Endabschnitt, welcher in Zwangsverbindung mit dem ersten Abschnitt (4c) des jeweiligen Installationsarms steht, und einen zweiten Endabschnitt, welcher in Zwangsverbindung mit dem zweiten Abschnitt (4d) des jeweiligen Installationsarms steht, und wobei der Aktuator (6), optional linear, in der ersten Betriebskonfiguration eine erste Erweiterung des zweiten Abschnitts (4d) des jeweiligen Arms in Bezug auf den ersten Abschnitt (4c) bewirkt und in der zweiten Betriebskonfiguration eine zweite Erweiterung des zweiten Abschnitts (4d) des jeweiligen Arms bezüglich des ersten Abschnitts (4c) bewirkt, wobei die zweite Erweiterung länger als die erste Erweiterung ist und insbesondere eine maximale Erweiterung ist.

5. Industrieller Wagen nach einem der vorhergehenden Ansprüche, wobei der erste Arm (4a) und der zweite Arm (4b) Wagenarme sind, welche mit wenigstens einem Rad oder wenigstens einer Rolle (5) bereitgestellt sind, dazu eingerichtet, den jeweiligen Arm in Bezug auf eine Halterungsebene oder einen Boden zu haltern, auf welcher/welchem in Verwendung der jeweilige Arm liegt, wobei das wenigstens eine Rad oder die wenigstens eine Rolle (5) freilaufend an dem Arm installiert ist.

6. Industrieller Wagen nach Anspruch 5, wobei das wenigstens eine Rad oder die wenigstens eine Rolle entsprechend dem zweiten Abschnitt (4d) des ersten Arms (4a) und des zweiten Arms (4b) installiert ist.

7. Industrieller Wagen nach Anspruch 5 oder Anspruch 6, wobei das Kompensationssystem für Lastungleichgewichte und/oder für eine Neigungskompensation dazu eingerichtet ist, entlang einer ersten Referenzachse (Y) und/oder entlang einer dritten Referenzachse (Z) zu arbeiten, welche orthogonal in Bezug auf die erste Referenzachse (Y) ist, wobei das Kompensationssystem eine bewegliche Halterung (15) für das wenigstens eine Rad oder die wenigstens eine Rolle (5) umfasst, wobei die bewegliche Halterung entsprechend dem ersten Arm (4a) und/oder dem zweiten Arm (4b) installiert ist; wobei die bewegliche Halterung dazu eingerichtet ist, dem Rad oder der Rolle (5) zu erlauben, sich zwischen einer ersten räumlichen Position, in welcher sich die Achse des Rads oder der Rolle (5) in Bezug auf den Arm in einer ersten Position befindet, und einer zweiten räumlichen Position zu bewegen, in welcher sich die Achse des Rads oder der Rolle in Bezug auf den Arm in einer zweiten Position befindet.

8. Industrieller Wagen nach Anspruch 7, umfassend einen Aktuator (13), vorzugsweise linear, welcher entsprechend dem zweiten Abschnitt (4d) des ersten und/oder des zweiten Arms (4a; 4b) installiert ist, wobei der Aktuator (13) dazu eingerichtet ist, die bewegliche Halterung (14) wenigstens zwischen der ersten und der zweiten räumlichen Position in Bewegung zu setzen.

9. Industrieller Wagen nach einem der vorhergehenden Ansprüche, umfassend ebenfalls ein System für eine transversale Bewegung für den ersten und den zweiten Arm (4a, 4b), welches dazu eingerichtet ist, es zu erlauben, die Positionierung des ersten und des zweiten Arms (4a, 4b) wenigstens zwischen einem ersten gegenseitigen Abstand und einem zweiten gegenseitigen Abstand zu variieren; wobei das System für eine transversale Bewegung wenigstens einen linearen Aktuator (6) eines vorzugsweise pneumatischen oder hydraulischen Typs umfasst.

10. Industrieller Wagen nach Anspruch 1, umfassend eine Datenverarbeitungseinheit (20), welche dazu eingerichtet ist, wenigstens in einer ersten Betriebskonfiguration zu arrangieren, in welcher sie das Kompensationssystem in einer im Wesentlichen automatischen Weise steuert.

11. Industrieller Wagen nach Anspruch 1, wobei das Kompensationssystem für Lastungleichgewichte und/oder für eine Neigungskompensation dazu eingerichtet ist, es zu erlauben, die Höhe zu variieren, welche der erste und der zweite Arm (4a, 4b) in Verwendung in Bezug auf den Boden aufweisen.

## Revendications

1. Chariot industriel, pour transporter en particulier des charges sur une palette comprenant :
- un cadre de support (2) ;
- au moins un premier chariot (3a), installé sur ledit cadre de support (2) ;
- une portion de chargement (4), comprenant un premier bras (4a) et un second bras (4b) conçus pour permettre le chargement d'au moins une palette ; ledit premier bras et ledit second bras (4a, 4b) se déployant eux-mêmes chacun sensiblement de manière linéaire le long d'un sens détecté par un premier axe de référence (Y) ;
ledit premier et ledit second bras (4a, 4b) comprenant chacun au moins une première portion (4c) et une seconde portion (4d) ; lesdits premier et second bras (4a, 4b) comprenant au moins une première configuration de fonctionnement à l'intérieur de laquelle lesdites première portion (4c) et seconde portion (4d) définissent une première longueur du premier et/ou du second bras (4a, 4b) respectifs et une seconde configuration de fonctionnement à l'intérieur de laquelle lesdites première portion (4c) et seconde portion (4d) définissent une seconde longueur du premier et/ou du second bras (4a, 4b) respectifs ;
le chariot industriel comprenant un second chariot (3b) installé sur ledit cadre de support,
**caractérisé en ce que** le premier chariot (3a), et éventuellement ledit second chariot (3b) sont installés de manière pivotante sur ledit cadre de support (2) et tournent par rapport à un second axe de référence (X) orthogonal par rapport audit premier axe de référence (Y) ;
le chariot industriel comprenant un système de compensation de déséquilibres de charge et/ou de compensation de pente, ledit système de compensation étant conçu pour fonctionner le long dudit premier axe de référence (Y) et/ou le long d'un troisième axe de référence (Z) orthogonal par rapport audit premier axe de référence (Y) ;
ledit système de compensation comprenant au moins un dispositif d'actionnement linéaire (19), pour ledit premier chariot (3a), et un dispositif d'actionnement linéaire (19) pour ledit second chariot (3b), et chacun desdits dispositifs d'actionnement linéaires (19) étant conçu pour être disposé dans au moins une première configuration de fonctionnement en correspondance de laquelle ledit premier chariot (3a) et/ou ledit second chariot (3b) se trouvent dans une première position par rapport audit cadre de support, et dans une seconde configuration de fonctionnement en correspondance de laquelle ledit premier chariot (3a) et/ou ledit second chariot (3b) se trouvent dans une seconde position par rapport audit cadre de support (2), ladite seconde position étant différente de ladite première position et ledit dispositif d'actionnement pour ledit premier chariot (3a) pouvant fonctionner indépendamment dudit dispositif d'actionnement pour ledit second chariot (3b).

2. Chariot industriel selon la revendication 1, ledit premier chariot (3a) et ledit second chariot (3b) comprenant chacun une première et une seconde roue (10) et au moins un premier moteur (11) connecté à ladite première roue (10) et/ou à ladite seconde roue.

3. Chariot industriel selon la revendication 2, ledit premier chariot (3a) et ledit second chariot (3b) comprenant chacun une première et une seconde roue (10) d'un premier moteur (11) connecté à ladite première roue (10) et un second moteur connecté à ladite seconde roue (10), ledit premier et ledit second moteur étant conçus :
- pour actionner en rotation ladite première et ladite seconde roue (10) dans le même sens de rotation ;
- pour actionner en rotation ladite première roue dans un sens de rotation opposé par rapport à la rotation de ladite seconde roue.

4. Chariot industriel selon l'une quelconque des revendications précédentes, comprenant pour chaque premier ou second bras (4a, 4b), au moins un dispositif d'actionnement (6), éventuellement linéaire, comprenant une première portion d'extrémité contrainte à ladite première portion (4c) du bras d'installation respectif, et une seconde portion d'extrémité contrainte à ladite seconde portion (4d) du bras d'installation respectif, et ledit dispositif d'actionnement (6), éventuellement linéaire, dans ladite première configuration de fonctionnement amenant une première extension de ladite seconde portion (4d) du bras respectif par rapport à ladite première portion (4c), et dans ladite seconde configuration de fonctionnement amenant une seconde extension de ladite seconde portion (4d) du bras respectif par rapport à ladite première portion (4c), ladite seconde extension étant plus longue que ladite première extension, et étant en particulier une extension maximale.

5. Chariot industriel selon l'une quelconque des revendications précédentes, ledit premier bras (4a) et ledit second bras (4b) étant des bras de chariot pourvus d'au moins une roue ou roulette (5) conçue pour supporter le bras respectif par rapport à un plan ou à un sol de support sur lequel repose le bras respectif durant l'utilisation, ladite au moins une roue ou roulette (5) étant installée de façon passive sur ledit bras.

6. Chariot industriel selon la revendication 5, ladite au moins une roue ou roulette étant installée en correspondance de ladite seconde portion (4d) dudit premier bras (4a) et dudit second bras (4b).

7. Chariot industriel selon la revendication 5 ou la revendication 6, ledit système de compensation de déséquilibres de charge et/ou de compensation de pente étant conçu pour fonctionner le long dudit premier axe de référence (Y) et/ou le long d'un troisième axe de référence (Z) orthogonal par rapport audit premier axe de référence (Y), ledit système de compensation comprenant un support mobile (14) pour ladite au moins une roue ou roulette (5), ledit support mobile étant installé en correspondance dudit premier bras (4a) et/ou dudit second bras (4b) ; ledit support mobile étant conçu pour permettre à ladite roue ou roulette (5) de se déplacer entre une première position spatiale dans laquelle l'axe de ladite roue ou roulette (5) se trouve dans une première position par rapport audit bras et une seconde position spatiale dans laquelle l'axe de ladite roue ou roulette se trouve dans une seconde position par rapport audit bras.

8. Chariot industriel selon la revendication 7 comprenant un dispositif d'actionnement (13) préférablement linéaire, installé en correspondance de la seconde portion (4d) dudit premier et/ou dudit second bras (4a, 4b), ledit dispositif d'actionnement (13) étant conçu pour faire fonctionner en mouvement ledit support mobile (14) au moins entre ladite première et ladite seconde position spatiale.

9. Chariot industriel selon l'une quelconque des revendications précédentes, comprenant également un système de mouvement transversal pour lesdits premier et second bras (4a, 4b), conçu pour permettre de faire varier le positionnement du premier et du second bras (4a, 4b) au moins entre une première distance réciproque et une seconde distance réciproque ; ledit système de mouvement transversal comprenant au moins un dispositif d'actionnement linéaire (6) préférablement de type pneumatique ou hydraulique.

10. Chariot industriel selon la revendication 1, comprenant une unité de traitement de données (20) conçue pour s'agencer dans au moins une première configuration de fonctionnement dans laquelle elle commande ledit système de compensation d'une manière sensiblement automatique.

11. Chariot industriel selon la revendication 1, ledit système de compensation de déséquilibres de charge et/ou de compensation de pente étant conçu pour permettre de faire varier la hauteur que lesdits premier et second bras (4a, 4b) présentent durant l'utilisation par rapport au sol.
